# EUROPÄISCHE PATENTSCHRIFT

(11) **EP 2 086 078 B1**
(45) Veröffentlichungstag und Bekanntmachung des Hinweises auf die Patenterteilung: **16.03.2016**
(21) Anmeldenummer: 09000755.0
(22) Anmeldetag: 21.01.2009
(51) Int. Cl.: H02G 3/12, H02B 1/20

(54) **Verteilerkasten zum Einbau in eine Wandöffnung**
Distributor box for fitting in a wall opening
Boîtier de distribution destiné à l'intégration dans une ouverture murale

(30) Priorität: 26.01.2008 DE 102008006325; 26.05.2008 DE 102008026047
(43) Veröffentlichungstag der Anmeldung: 05.08.2009
(73) Patentinhaber: Hager Electro GmbH & Co. KG, 66131 Saarbrücken (DE)
(72) Erfinder: Gros, Bernhard, 57800 Betting (FR); Dissel, Klaus, 66131 Saarbrücken-Ensheim (DE); Kessler, Franz, 66271 Kleinblittersdorf-Bliesransbach (DE)
(74) Vertreter: Nuss, Laurent

(56) Entgegenhaltungen:
- WO-A1-2004/109883
- JP-A- 2001 177 925

## Beschreibung

Die Erfindung betrifft einen Verteilerkasten zum Einbau in eine Wandöffnung, mit einem Kastenboden und sich vom Rand des Kastenbodens erstreckenden Seitenwänden, wobei die Seitenwände an ihrem dem Kastenboden fernen Rand nach außen abgewinkelt sind und zumindest in den vertikalen Seitenwänden eine Stufe gebildet ist.

Durch Benutzung sowie aus der WO 2004/109883 sind solche Verteilerkästen bekannt, deren Abwinklung an den Seitenwänden einen umlaufenden, an einem Öffnungsrand z.B. gegen eine Wandschale einer Doppelwand anlegbaren Flansch bilden. Durch die stufenförmige Ausbildung der Seitenwände, die durch Abwinklung des Wandungsmaterials erfolgt, werden auf der Kastenaußenseite Hohlkehlen gebildet, in denen z.B. Verankerungselemente zur Befestigung des Kastens in der Wandöffnung untergebracht werden können.

Aus der JP 2001 177 925 A geht ein Verteilerkasten hervor, der zur Montage an einer Wand vorgesehen und der in seinen äußeren Abmessungen veränderbar ist. Entlang vertikaler Seitenwände erstrecken sich auf der Kasteninnenseite Kabelkanäle.

Der Erfindung liegt die Aufgabe zugrunde, einen neuen Verteilerkasten der eingangs erwähnten Art zu schaffen, der bei uneingeschränkten Möglichkeiten zur Befestigung des Kastens in der Wandöffnung eine vereinfachte Montage von Einbauten ermöglicht und insbesondere deren Verdrahtung erleichtert.

Der diese Aufgabe lösende Verteilerkosten nach der Erfindung ist dadurch gekennzeichnet, dass an wenigstens einer der vertikalen Seitenwände ein Wandabschnitt gegen den zum Kastenboden senkrechten Wandabschnitt der Stufe unter Bildung eines seitlichen Verdrahtungsraums über einen Teil der Seitenwandlänge nach außen versetzt ist.

Durch den gemäß der Erfindung geschaffenen Verdrahtungsraum wird die Montage von Einbauten wesentlich erleichtert. Indem nur ein Teil der Seitenwandlänge für die Raumerweiterung genutzt wird, bleibt auf der Kastenaußenseite genügend Freiraum für die Unterbringung von Verankerungselementen.

Vorzugsweise ist der nach außen versetzte Wandabschnitt symmetrisch zur horizontalen Mittelebene des Verteilerkastens angeordnet. So bleibt oben und unten gleich viel Raum für Hohlkehlen auf der Kastenaußenseite.

Zweckmäßig ist im Bereich des nach außen versetzten Wandabschnitts eine stufenförmige Erhöhung des Kastenbodens gebildet, die insbesondere über die genannte Stufe hinaus in den Kasteninnenraum hinein vorspringt. Vorteilhaft lässt sich diese Bodenerhöhung als Auflagekonsole für Geräteträgerelemente, vorzugsweise Hutprofilschienen nutzen. Befestigungsbohrungen für solche Trägerelemente können insbesondere am abgewinkelten Innenrand der Bodenerhöhung vorgesehen sein, wo Material für diese Bohrungen gehäuft zur Verfügung steht.

Zweckmäßig schließt der nach außen versetzte Wandabschnitt bündig mit einem den abgewinkelten Endrand aufweisenden Wandabschnitt ab. Die Kastenbreite wird somit maximal zur Erweiterung des Kasteninnenraums genutzt.

Zweckmäßig ist am Ende des nach außen versetzten Wandabschnitts ein schräger Wandabschnitt als Übergang zu dem zum Kastenboden senkrechten Wandabschnitt der Stufe gebildet. Vorteilhaft erleichtert ein solcher schräger Wandabschnitt die Einführung von Kabeln in den seitlichen Verdrahtungsraum, deren Enden sich an den schrägen Wandabschnitten nicht verhaken können.

Ein zum Kastenboden paralleler Wandabschnitt der genannten Stufe ist im Bereich des nach außen versetzten Wandabschnitts zweckmäßig als von der Seitenwand vorstehender Steg fortgesetzt. Vorteilhaft bildet dieser Steg eine Führung und einen Schutz für in dem Verdrahtungsraum verlegte Kabel.

In einer weiteren Ausführungsform der Erfindung weist der Verteilerkasten Einrichtungen zur Führung von Kabeln in vertikaler Richtung entlang einer Kastenseitenwand auf, wobei diese Einrichtungen eine Öse umfassen, die über einen Teil ihres Umfangs durch einen Abschnitt der Kastenseitenwand gebildet ist.

Ein weiterer Teil der Öse kann durch einen Schenkel gebildet sein, der an einem Ende gegen die Seitenwand anliegt und elastisch von der Seitenwand wegbiegbar ist.

Vorzugsweise ist der Schenkel am anderen Ende mit dem Kastenboden oder einem vom Kastenboden vorstehenden Vorsprung verbunden. Der Schenkel kann somit eine verhältnismäßig große Hebellänge aufweisen und daher leicht unter geringem Kraftaufwand von der Seitenwand wegbiegbar sein.

Vorzugsweise weist der Schenkel ein Griffteil zum Abbiegen auf, wobei ein solcher Griffteil vorzugsweise durch eine von der Seitenwand wegführende Abbiegung gebildet ist.

Die Erfindung wird nachfolgend anhand eines Ausführungsbeispiels und der beiliegenden, sich auf dieses Ausführungsbeispiel beziehenden Zeichnungen weiter erläutert. Es zeigen:
- Fig. 1: einen Verteilerkasten nach der Erfindung in einer perspektivischen Ansicht mit abgenommenen horizontalen Seitenwänden,
- Fig. 2: den Verteilerkasten von Fig. 1 in perspektivischer Teildarstellung mit eingebauten Geräten,
- Fig. 3: ein weiteres Ausführungsbeispiel für einen Verteilerkasten nach der Erfindung in perspektivischer Ansicht mit einer Kabelführungseinrichtung und
- Fig. 4: eine Teildarstellung des Verteilerkastens von Fig. 3 in einer Schnittansicht in geschlossenem und offenem Zustand der Kabelführungseinrichtung.

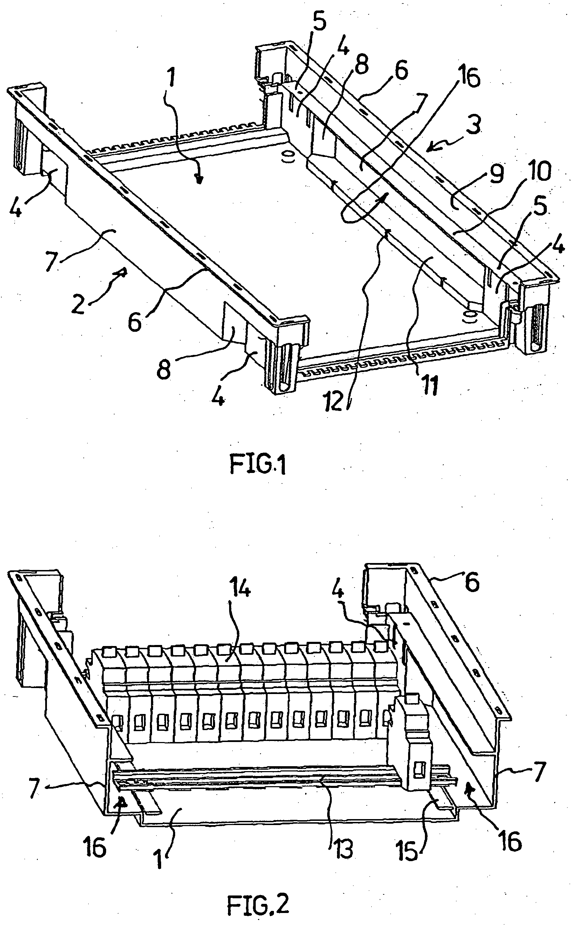

Ein Verteilerkasten aus Kunststoff weist einen Kastenboden 1 und sich vom Bodenrand erstreckende vertikale Seitenwände 2 und 3 auf, die mit dem Kastenboden einstückig verbunden sind. Von dem Kasten abnehmbare horizontale Seitenwände sind in Fig. 1 nicht dargestellt.

In den vertikalen Seitenwänden 2 und 3 ist jeweils durch Abwinklung der Wandung eine Stufe mit einem zum Kastenboden 1 senkrechten Wandabschnitt 4 und einem dazu parallelen Wandabschnitt 5 gebildet. Den freien Endrand der Seitenwände 2 und 3 schließt jeweils eine nach außen gerichtete Abwinklung 6 zur Bildung eines um die Kastenöffnung umlaufenden Flansches ab.

Wie die Figuren 1 und 2 erkennen lassen, ist der zum Boden 1 senkrechte Wandabschnitt 4 der Seitenwände 1 und 2 jeweils unterbrochen und ein gegen den Wandabschnitt 4 nach außen versetzter Wandabschnitt 7 gebildet. In dem gezeigten Ausführungsbeispiel schließt der Wandabschnitt 7 jeweils bündig mit einem die Abwinklung 6 aufweisenden Wandabschnitt 9 am freien Rand der Seitenwände ab. Der zur Längsmitte der Seitenwand symmetrisch angeordnete Wandabschnitt 7 geht an seinen Enden über schräg verlaufende Wandabschnitte 8 in den unterbrochenen Wandabschnitt 4 über.

Die zum Kastenboden 1 parallelen Wandabschnitte 5 der Seitenwände 2 und 3 gehen bei den schrägen Wandabschnitten 8 jeweils in einen Steg 10 über, der von den Seitenwänden jeweils zwischen den Wandabschnitten 7 und 9 zum Kasteninneren hin vorsteht.

Im Bereich der zurückversetzten Wandabschnitte 7 ist jeweils durch Abwinklung der Kastenwandung eine stufenartige Bodenerhöhung 11 gebildet, die im Vergleich zu der die Wandabschnitte 4 und 5 aufweisenden Stufe weiter zum Kasteninneren hin vorspringt. Unmittelbar am Stufenrand der Bodenerhöhung 11 sind längsseitig offene Befestigungsbohrungen 12 gebildet.

Wie Fig. 2 erkennen lässt, lassen sich an den Bohrungen 12 Hutprofilschienen 13 als Träger für Einbaugeräte 14 befestigen. In dem gezeigten Ausführungsbeispiel sind die Hutschienen untereinander durch Längsträger 15 verbunden.

Durch die nach außen versetzten Wandabschnitte 4 sind seitliche Verdrahtungsräume 16 gebildet, welche Montagearbeiten im Verteilerkasten wesentlich erleichtern.

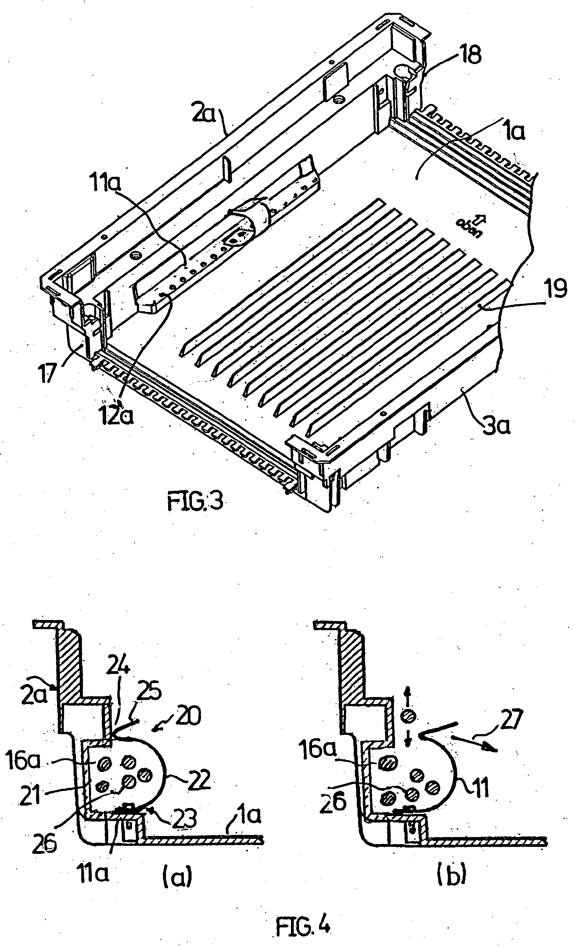

Es wird nun auf die Figuren 3 und 4 Bezug genommen, wo gleiche oder gleichwirkende Teile mit derselben Bezugszahl wie in den vorangehenden Figuren bezeichnet sind, wobei der betreffenden Bezugszahl der Buchstabe a beigefügt ist.

Ein wannenartiger Verteilerkasten aus Kunststoff weist einen Boden 1a, vertikale Seitenwände 2a und 3a sowie teilweise abnehmbare horizontale Seitenwände 17 und 18 auf.

An den vertikalen Seitenwänden 2a und 3a ist als Übergang zum Boden 1a jeweils ein stufenförmiger Bodenvorsprung 11a in einer Reihe von Befestigungsbohrungen 12a gebildet. An dem stufenförmigen Bodenvorsprung 11a, der in einen seitlichen Verdrahtungsraum 16a hineinragt, können horizontal verlaufende Trägerschienen (nicht gezeigt) für die Aufnahme von Einbaugeräten, insbesondere Sicherungsschaltern befestigt werden.

In einem zentralen Bereich des Bodens 1a sind im Abstand von den vertikalen und horizontalen Seitenwänden Kabelführungseinrichtungen in Form zueinander paralleler, vom Boden 1a vorstehender Stege 19 gebildet. Die Höhe der Stege 19 ist gleich der Höhe der stufenförmigen Bodenvorsprünge 11a, so dass die Stege bis an die diese kreuzenden Trägerschienen heranreichen.

Wahlweise zu den Kabelführungseinrichtungen, die durch die Stege 19 gebildet sind, können an den Seitenwänden 2a und 3a angeordnete Kabelführungseinrichtungen 20 genutzt werden, welche die Form einer Öse haben, die über einen Teil ihres Umfangs durch einen Abschnitt 21 der betreffenden Seitenwand gebildet ist. Die Kabelführungseinrichtungen 20 umfassen einen gebogenen Schenkel 22 aus federndem Material, z.B. Stahlblech, der an einem Ende bei 23 mit dem stufenförmigen Bodenvorsprung 11 a verschraubt ist und mit dem anderen Ende bei 24 unter leichter Spannung gegen die betreffende vertikale Seitenwand anliegt.

Bei 24 ist der Schenkel 22 unter Bildung eines Griffstücks 25 entgegen der Biegungsrichtung der Öse abgebogen.

Wie Fig. 4 zeigt, können durch die Kabelführungseinrichtungen 20 die Verdrahtung von Einbaugeräten bildende elektrische Leitungen 26 geordnet entlang den vertikalen Seitenwänden 2a und 3a des Verteilerkastens teilweise unter Nutzung des seitlichen Verdrahtungsraums 16a verlegt werden.

Zum Einlegen oder Herausnehmen von Leitungen in bzw. aus der Kabelführungseinrichtung 20 wird der Schenkel 22 gemäß Pfeil 27 mit Hilfe des Griffstücks 25 elastisch von der betreffenden Seitenwand weggebogen, wie dies in Fig. 4b gezeigt ist.

## Patentansprüche

1. Verteilerkasten zum Einbau in eine Wandöffnung, mit einem Kastenboden (1) und sich vom Rand des Kastenbodens (1) erstreckenden horizontalen und vertikalen Seitenwänden (2,3), wobei die Seitenwände (2,3) an ihrem dem Kastenboden (1) fernen Rand nach außen abgewinkelt sind und zumindest in den vertikalen Seitenwänden (2,3) eine Stufe (4,5) gebildet ist,
**dadurch gekennzeichnet,**
**dass** an wenigstens einer der vertikalen Seitenwände (2,3) ein Wandabschnitt (7) gegen den zum Kastenboden (1) senkrechten Wandabschnitt der Stufe (4,5) unter Bildung eines seitlichen Verdrahtungsraums (16) über einen Teil der Seitenwandlänge nach außen versetzt ist.

2. Verteilerkasten nach Anspruch 1,
**dadurch gekennzeichnet,**
**dass** der nach außen versetzte Wandabschnitt (7) symmetrisch zur horizontalen Mittelebene des Verteilerkastens angeordnet ist.

3. Verteilerkasten nach Anspruch 1 oder 2,
**dadurch gekennzeichnet,**
**dass** im Bereich des nach außen versetzten Wandabschnitts (7) angrenzend an den nach außen versetzten Wandabschnitt (7) eine stufenförmige Erhöhung (11) des Kastenboden (1) gebildet ist.

4. Verteilerkasten nach Anspruch 3,
**dadurch gekennzeichnet,**
**dass** die Bodenerhöhung (11) über die Stufe (4,5) hinaus in den Innenraum des Verteilerkastens hinein vorspringt.

5. Verteilerkasten nach Anspruch 3 oder 4,
**dadurch gekennzeichnet,**
**dass** am Innenrand der Bodenerhöhung (11) Bohrungen (12) gebildet sind.

6. Verteilerkasten nach einem der Ansprüche 1 bis 5,
**dadurch gekennzeichnet,**
**dass** der nach außen versetzte Wandabschnitt (7) bündig mit einem abgewinkelten Wandabschnitt (9) an dem dem Kastenboden (1) fernen Rand der vertikalen Seitenwand (2,3) abschließt.

7. Verteilerkasten nach einem der Ansprüche 1 bis 6,
**dadurch gekennzeichnet,**
**dass** der nach außen versetzte Wandabschnitt (7) über schräge Wandabschnitte (8) in den zum Kastenboden (1) senkrechten Wandabschnitt (4) übergeht.

8. Verteilerkasten nach einem der Ansprüche 1 bis 7,
**dadurch gekennzeichnet,**
**dass** ein zu dem Kastenboden (1) paralleler Wandabschnitt (5) der Stufe im Bereich des nach außen versetzten Wandabschnitts (7) in einen von der Seitenwand (2,3) nach innen vorstehenden Steg (10) übergeht.

9. Verteilerkasten nach einem der Ansprüche 1 bis 8,
**dadurch gekennzeichnet,**
**dass** Einrichtungen (20) zur Führung von Kabeln (26) in vertikaler Richtung entlang einer Kastenseitenwand (2a,3a) vorgesehen sind, wobei die Einrichtungen (20) eine Öse aufweisen, die über einen Teil ihres Umfangs durch einen Abschnitt (21) der Kastenseitenwand (2a,3a) gebildet ist.

10. Verteilerkasten nach Anspruch 9,
**dadurch gekennzeichnet,**
**dass** ein weiterer Teil der Öse durch einen Schenkel (22) gebildet ist, der an einem Ende (23) gegen die Seitenwand (2a,3a) anliegt und elastisch von der Seitenwand wegbiegbar ist.

11. Verteilerkasten nach Anspruch 10,
**dadurch gekennzeichnet,**
**dass** der Schenkel (22) unter Spannung gegen die Kastenseitenwand (2a,3a) anliegt.

12. Verteilerkasten nach einem der Ansprüche 9 bis 11,
**dadurch gekennzeichnet,**
**dass** der Schenkel (22) am anderen Ende (24) mit dem Kastenboden (1a) oder einem von dem Kastenboden (a) vorstehenden Vorsprung (11a) verbunden ist.

13. Verteilerkasten nach einem der Ansprüche 9 bis 12,
**dadurch gekennzeichnet.**
**dass** ein Griffstück (25) zum Abbiegen des Schenkels (22) vorgesehen ist.

14. Verteilerkasten nach Anspruch 13,
**dadurch gekennzeichnet,**
**dass** das Griffstück (14) durch eine von der Seitenwand (2a,3a) wegführende Abbiegung gebildet ist.

## Claims

1. Distributor box for fitting in a wall opening, with a box base (1) and horizontal and vertical side walls (2,3) extending from the edge of the box base (1), wherein the side walls (2,3) are bent outwardly on their edge furthest from the box base (1) and at least one step (4,5) is formed in the vertical side walls (2,3),
**characterised in that**,
on at least one of the vertical side walls (2,3), a wall section (7) is offset outwards in relation to the wall section, perpendicular to the box base (1), of the step (4,5) to form a lateral wiring space (16) along a part of the side wall.

2. Distributor box according to claim 1,
**characterised in that**
the wall section (7) offset to the outside is arranged symmetrically with the horizontal central plane of the distributor box.

3. Distributor box according to claim 1 or 2,
**characterised in that**
a step-shaped elevation (11) of the box base (1) is formed in the area of the outwardly offset wall section (7) adjacent to the outwardly offset wall section (7).

4. Distributor box according to claim 3,
**characterised in that**
the base elevation (11) projects beyond the step (4,5) into the internal space of the distributor box.

5. Distributor box according to claim 3 or 4,
**characterised in that**
bored holes (12) are formed on the inner edge of the base elevation (11).

6. Distributor box according to one of the claims 1 to 5,
**characterised in that**
the outwardly offset wall section (7) terminates flush with a bent-out wall section (9) on the edge of the vertical side wall (2,3) furthest from the box base (1).

7. Distributor box according to one of the claims 1 to 6,
**characterised in that**
the outwardly offset wall section (7) merges over slanting wall sections (8) into the wall section (4) perpendicular to the box base (1).

8. Distributor box according to one of the claims 1 to 7,
**characterised in that**
a wall section (5), parallel to the box base (1), of the step merges into a bridge (10) protruding inwards from the side wall (2,3) in the area of the outwardly offset wall section (7).

9. Distributor box according to one of the claims 1 to 8,
**characterised in that**
fittings (20) to run cables (26) in a vertical direction along a box side wall (2a,3a) are provided, wherein the fittings (20) have an eyelet formed over a part of their circumference by a section (21) of the box side wall (2a,3a).

10. Distributor box according to claim 9,
**characterised in that**
another part of the eyelet is formed by a leg (22) which rests against the side wall (2a,3a) at one end (23) and can be bent away from the side wall elastically.

11. Distributor box according to claim 10,
**characterised in that**
the leg (22) rests under tension against the box side wall (2a,3a).

12. Distributor box according to one of the claims 9 to 11,
**characterised in that**
the leg (22) is attached at the other end (24) to the box base (1a) or to a projection (11a) protruding from the box base (1a).

13. Distributor box according to one of the claims 9 to 12,
**characterised in that**
a handle section (25) is provided to bend the leg (22) away.

14. Distributor box according to claim 13,
**characterised in that**
the handle section (14) is formed by a bent part pointing away from the side wall (2a,3a).

## Revendications

1. Boîtier de distribution destiné à être intégré dans une ouverture murale, comprenant un fond de boîtier (1) et des parois latérales (2, 3) horizontales et verticales s'étendant depuis le bord du fond de boîtier (1), les parois latérales (2, 3) étant repliées vers l'extérieur à leur bord éloigné du fond de boîtier (1) et un gradin (4, 5) étant formé au moins dans les parois latérales verticales (2, 3),
**caractérisé en ce**
**que** sur au moins une des parois latérales verticales (2, 3), une section de paroi (7) est décalée vers l'extérieur par rapport à la section de paroi du gradin (4, 5) perpendiculaire au fond de boîtier (1), formant ainsi une chambre de câblage latérale (16) sur une partie de la longueur de la paroi latérale.

2. Boîtier de distribution selon la revendication 1,
**caractérisé en ce**
**que** la section de paroi (7) décalée vers l'extérieur est disposée symétriquement par rapport au plan médian horizontal du boîtier de distribution.

3. Boîtier de distribution selon la revendication 1 ou la revendication 2,
**caractérisé en ce**
**qu'**un rehaussement (11) en forme de gradin du fond de boîtier (1) est formé dans la zone de la section de paroi (7) décalée vers l'extérieur, de façon attenante à la section de paroi (7) décalée vers l'extérieur.

4. Boîtier de distribution selon la revendication 3,
**caractérisé en ce**
**que** le rehaussement de fond (11) fait saillie dans l'espace intérieur du boîtier de distribution au-delà du gradin (4, 5).

5. Boîtier de distribution selon la revendication 3 ou la revendication 4,
**caractérisé en ce**
**que** des perçages (12) sont formés sur le bord intérieur du rehaussement de fond (11).

6. Boîtier de distribution selon l'une des revendications 1 à 5,
**caractérisé en ce**
**que** la section de paroi (7) décalée vers l'extérieur se termine en affleurement avec une section de paroi (9) repliée au bord de la paroi latérale verticale (2, 3) éloigné du fond de boîtier (1).

7. Boîtier de distribution selon l'une des revendications 1 à 6,
**caractérisé en ce**
**que** la section de paroi (7) décalée vers l'extérieur passe à la section de paroi (4) perpendiculaire au fond de boîtier (1) par des sections de paroi obliques (8).

8. Boîtier de distribution selon l'une des revendications 1 à 7,
**caractérisé en ce**
**qu'**une section de paroi (5) parallèle au fond de boîtier (1) du gradin dans la zone de la section de paroi (7) décalée vers l'extérieur passe à une nervure (10) en saillie vers l'intérieur par rapport à la paroi latérale (2, 3).

9. Boîtier de distribution selon l'une des revendications 1 à 8,
**caractérisé en ce**
**que** des moyens (20) pour le guidage de câbles (26) en direction verticale le long d'une paroi latérale de boîtier (2a, 3a) sont prévus, lesdits moyens (20) présentant un oeillet qui est formé sur une partie de son pourtour par une section (21) de la paroi latérale de boîtier (2a, 3a).

10. Boîtier de distribution selon la revendication 9,
**caractérisé en ce**
**qu'**une autre partie de l'oeillet est formée par une branche (22) qui est appliquée à une extrémité (23) contre la paroi latérale (2a, 3a) et peut être écartée élastiquement de la paroi latérale.

11. Boîtier de distribution selon la revendication 10,
**caractérisé en ce**
**que** la branche (22) est appliquée sous tension contre la paroi latérale de boîtier (2a, 3a).

12. Boîtier de distribution selon l'une des revendications 9 à 11,
**caractérisé en ce**
**que** la branche (22) est reliée à l'autre extrémité (24) au fond de boîtier (1a) ou à une saillie (11a) dépassant du fond de boîtier (1a).

13. Boîtier de distribution selon l'une des revendications 9 à 12,
**caractérisé en ce**
**qu'**une partie de préhension (25) permettant de plier la branche (22) est prévue.

14. Boîtier de distribution selon la revendication 13,
**caractérisé en ce**
**que** la partie de préhension (14) est formée par une courbure s'éloignant de la paroi latérale (2a, 3a).
